(19)

Europäisches
Patentamt
European
Patent Office
Office européen
des brevets

(11) **EP 3 214 587 A1**

(12) **EUROPEAN PATENT APPLICATION**

(43) Date of publication:
06.09.2017 Bulletin 2017/36

(21) Application number: **17153829.1**

(22) Date of filing: **30.01.2017**

(51) Int Cl.:
*G06Q 10/04* (2012.01)　　　*G06Q 10/06* (2012.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **03.03.2016 JP 2016041574**

(71) Applicant: **FUJITSU LIMITED**
**Kawasaki-shi Kanagawa 211-8588 (JP)**

(72) Inventor: **NAKAZAWA, Katsuhito**
**Kawasaki-shi, Kanagawa 211-8588 (JP)**

(74) Representative: **Cooper-Rolfe, Elizabeth Louise**
**Haseltine Lake LLP**
**Lincoln House, 5th Floor**
**300 High Holborn**
**London WC1V 7JH (GB)**

(54) **ESTIMATING APPARATUS, ESTIMATING METHOD, AND ESTIMATING COMPUTER PROGRAM**

(57)　An estimating apparatus(100) calculates a correlation coefficient of first time-series data with respect to second time-series data on a basis of the first time-series data of a plurality of first indices and the second time-series data of a second index. The estimating apparatus(100) estimates an index having a causality relationship with the second index from among the plurality of first indices, on a basis of characteristics of time-series fluctuations of the correlation coefficients and values of the correlation coefficients.

FIG.1

**Description**

FIELD

The embodiment discussed herein is related to an estimating apparatus and the like.

BACKGROUND

In recent years, the decrease in the population and the aging society combined with a lower birthrate in the Japanese future are regarded as significant social problems. It is desirable for local governments to develop an optimal financial management plan while taking these problems into consideration. In the future, in order for local governments to be able to continuously provide a highly-satisfying administrative service for the residents, it is desirable to be able to select an optimal administrative plan, after making an administrative plan effective for solving issues and studying possible effects that can be achieved when the plan is introduced.

In this regard, when it is possible to extract an index that has a cause-and-effect relationship (hereinafter, "a causality relationship") with an index related to an issue, it is possible to expect that an effective result is achieved by developing an administrative plan for the index having the causality relationship. For example, when an index related to an issue is "total population", and an index having a causality relationship therewith is "the number of births", it is possible to expect the total population to increase when a child-care support plan is developed. According to conventional methods, it is a common practice to extract the index having a causality relationship on the basis of an empirical finding of a user, or the like.

Citation List

Patent Literature

Patent Literature 1: Japanese Laid-open Patent Publication No. 2012-160143
Patent Literature 2: Japanese Laid-open Patent Publication No. 2008-234094
Patent Literature 3: Japanese Laid-open Patent Publication No. 2004-078780

However, when the conventional technique described above is used, a problem remains where it is impossible to estimate the index having a causality relationship with the index related to the issue.

Because there are a wide variety of indices in the today's society, it is difficult to extract the index having a causality relationship with the index related to the issue on the basis of an empirical finding of a user, or the like, as described in the conventional method.

Accordingly, it is desirable to provide an estimating apparatus, an estimating method, and an estimating computer program that are able to estimate an index having a causality relationship with the index related to an issue.

SUMMARY

According to an aspect of an embodiment, a estimating apparatus includes a calculating unit(152) that calculates a correlation coefficient of first time-series data with respect to second time-series data on a basis of the first time-series data of a plurality of first indices and the second time-series data of a second index; and an estimating unit(153) that estimates an index having a causality relationship with the second index from among the plurality of first indices, on a basis of characteristics of time-series fluctuations of the correlation coefficients and values of the correlation coefficients.

BRIEF DESCRIPTION OF DRAWINGS

The invention is described, by way of example only, with reference to the following drawings, in which:

FIG. 1 is a functional block diagram illustrating a configuration of an estimating apparatus according to an embodiment;
FIG. 2 is a table illustrating an example of a data structure of a time-series index database;
FIG. 3 is a table illustrating an example of a data structure of a piece of time-series data;
FIG. 4 is a table illustrating an example of a data structure of causality index network data;
FIG. 5 is a table for explaining a process performed by a calculating unit;

FIG. 6 presents charts for explaining a process performed by an estimating unit to estimate a causality index;

FIG. 7 is a drawing for explaining a process performed by a predicting unit;

FIG. 8 is a diagram illustrating another example of a causality index network;

FIG. 9 is a flowchart illustrating a processing procedure performed by the estimating apparatus according to the present embodiment;

FIG. 10 is a table illustrating examples of indices used for predicting population;

FIG. 11 is a chart illustrating a result of a comparison between prediction results and an actual value in regression analyses using mutually-different index selecting methods; and

FIG. 12 is a diagram illustrating an example of a computer that executes an estimating computer program.

## DESCRIPTION OF EMBODIMENTS

Preferred embodiments of the present invention will be explained with reference to accompanying drawings. The present disclosure is not limited by the exemplary embodiment.

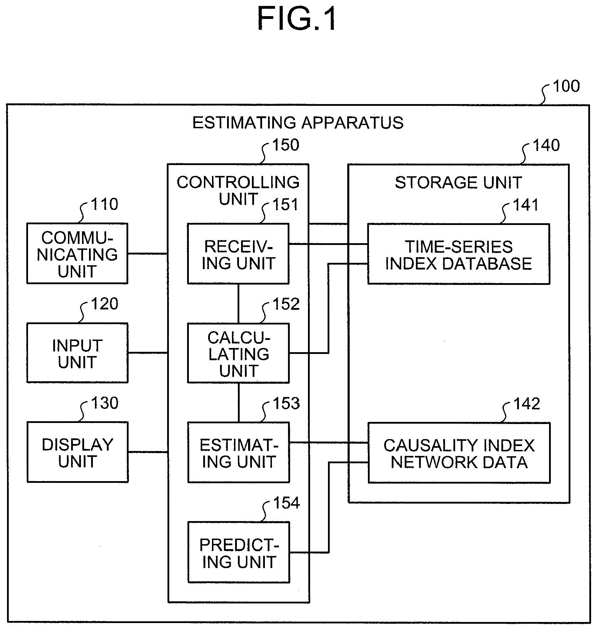

FIG. 1 is a functional block diagram illustrating a configuration of an estimating apparatus according to an embodiment. As illustrated in FIG. 1, an estimating apparatus 100 includes a communicating unit 110, an input unit 120, a display unit 130, a storage unit 140, and a controlling unit 150.

The communicating unit 110 is a processing unit that communicates with an external apparatus via a network. The communicating unit 110 corresponds to a communicating device.

The input unit 120 is an input device used for inputting various types of information into the estimating apparatus 100. The input unit 120 corresponds to a keyboard, a mouse, and/or a touch panel.

The display unit 130 is a display device that displays information output from the controlling unit 150. The display unit 130 corresponds to a liquid crystal display device, a touch panel, or the like.

The storage unit 140 includes a time-series index database 141 and a causality index network data 142. The storage unit 140 corresponds to a semiconductor memory element such as a Random Access Memory (RAM), a Read-Only Memory (ROM), or a flash memory, or to a storage device such as a Hard Disk Drive (HDD).

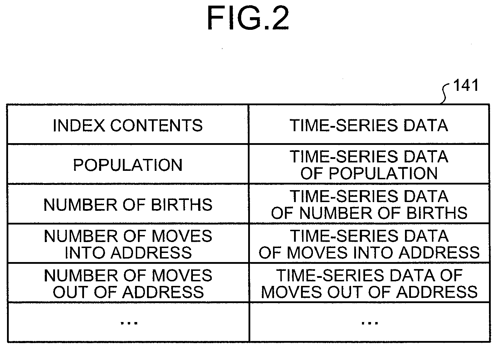

The time-series index database 141 stores therein a plurality of indices and pieces of time-series data corresponding to the indices so as to be kept in correspondence with one another. FIG. 2 is a table illustrating an example of a data structure of the time-series index database. As illustrated in FIG. 2, the time-series index database 141 keeps the contents of the indices (hereinafter, "index contents") in correspondence with the pieces of time-series data. Stored under the heading "index contents" are the contents of the indices (which may hereinafter be referred to as "index contents entries"). Stored under the heading "time-series data" are the pieces of time-series data each corresponding to a different one of the indices, and for example, values and dates/times are kept in correspondence with one another.

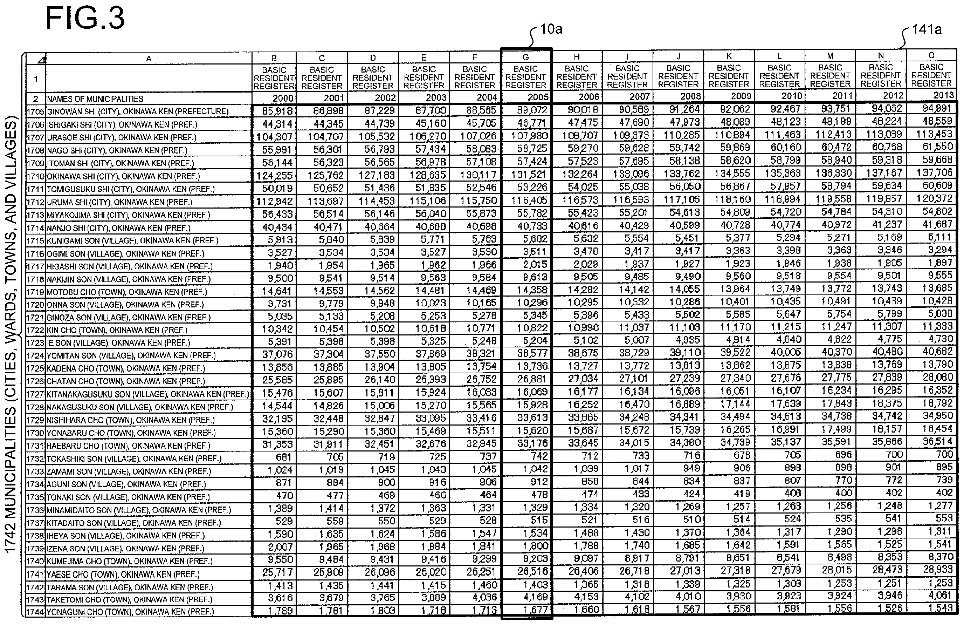

FIG. 3 is a table illustrating an example of a data structure of a piece of time-series data. Time-series data 141a illustrated in FIG. 3 is a piece of time-series data of population. The time-series data 141a keeps municipalities (cities, wards, towns, and villages) in correspondence with population values in different years. For example, the time-series data 141a contains a piece of information indicating that the population of "Ishigaki Shi (City), Okinawa Ken (Prefecture)" in "year 2000" was "44314". The years and the municipalities contained in the time-series data 141a in FIG. 3 are merely examples.

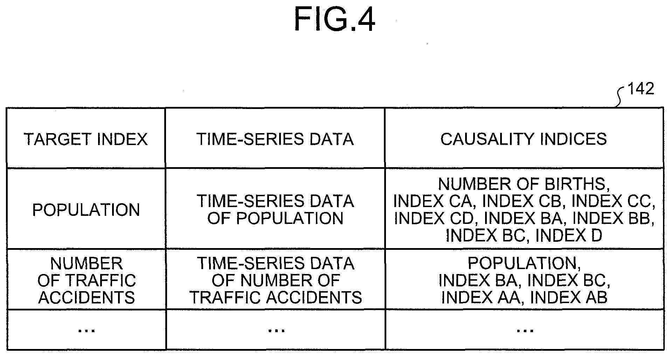

The causality index network data 142 stores therein information in which each of the indices related to an issue (hereinafter, "target indices") are kept in correspondence with indices each having a cause-and-effect relationship (hereinafter, "causality relationship") with the target index. FIG. 4 is a table illustrating an example of a data structure of the causality index network data. As illustrated in FIG. 4, the causality index network data 142 keeps the target indices, pieces of time-series data, and indices each having a causality relationship (hereinafter, "causality indices") in correspondence with one another. Stored under the heading "target indices" are the contents of the indices each related to an issue. Stored under the heading "time-series data" are the pieces of time-series data of the indices corresponding to the target indices. Stored under the heading "causality indices" are the contents of the indices each having a causality relationship with a different one of the indices related to the issues.

For example, the causality index network data 142 has registered therein information indicating that causality indices corresponding to the target index "population" are "the number of births, index CA, index CB, index CC, index CD, index BA, index BB, index BC, and index D".

The controlling unit 150 includes a receiving unit 151, a calculating unit 152, an estimating unit 153, and a predicting unit 154. The controlling unit 150 corresponds to an integrated device such as an Application Specific Integrated Circuit (ASIC) or a Field Programmable Gate Array (FPGA). Further, the controlling unit 150 corresponds to an electronic circuit such as a Central Processing Unit (CPU) or a Micro Processing Unit (MPU), for example.

The receiving unit 151 is a processing unit that receives an index related to an issue. In the following sections, the index related to an issue may be referred to as a "target index", as appropriate. The receiving unit 151 outputs information about the target index to the calculating unit 152.

For example, when a user has input an index selecting request by operating the input unit 120, the receiving unit 151 refers to the time-series index database 141 and causes the display unit 130 to display a plurality of index contents entries. The user refers to the plurality of index contents entries displayed by the display unit 130 and further selects a target index out of the plurality of index contents entries, by operating the input unit 120. For example, when having received a selection indicating the index contents entry "population", the receiving unit 151 receives the index contents entry "population" as a target index.

The calculating unit 152 is a processing unit that calculates a correlation coefficient between the time-series data of the target index and each of the pieces of time-series data in the time-series index database 141. The calculating unit 152 outputs information about the calculated correlation coefficients to the estimating unit 153. An example of a process performed by the calculating unit 152 will be explained below.

The calculating unit 152 obtains the time-series data of the target index from the time-series index database 141. Further, the calculating unit 152 obtains the time-series data of one of the index contents entries other than the target index, from the time-series index database 141. The calculating unit 152 calculates a correlation coefficient between the time-series data of the target index and the time-series data of the one of the index contents entries other than the target index.

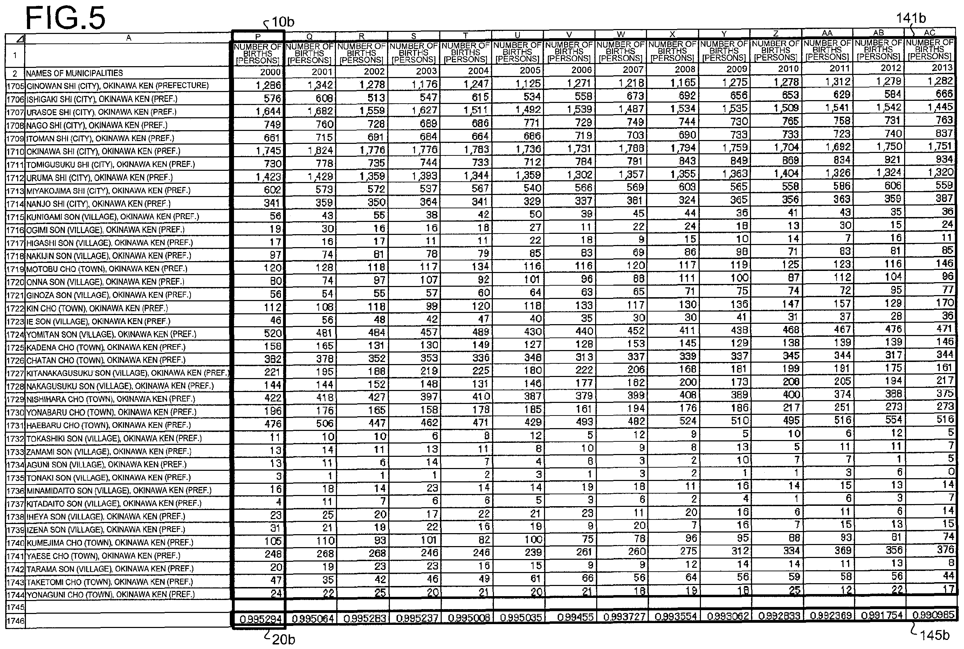

In the present example, let us assume that the time-series data of the target index is the time-series data 141a regarding the population illustrated in FIG. 3. The one of the index contents entries other than the target index is assumed to be "the number of births", while the time-series data of the number of birth is assumed to be a time-series data 141b illustrated in FIG. 5. FIG. 5 is a table for explaining a process performed by the calculating unit. By comparing a piece of column data of a reference year in the time-series data 141a with pieces of column data of different years in the time-series data 141b, the calculating unit 152 calculates a correlation coefficient for each of the years with respect to the reference year. The reference year may be set by the user in advance.

The calculating unit 152 obtains the piece of column data corresponding to the reference year from the time-series data 141a. Further, the calculating unit 152 obtains a piece of column data corresponding to one of the years from the time-series data 141b. The calculating unit 152 then calculates a correlation coefficient between the obtained pieces of column data.

For example, when the reference year is "year 2005", the calculating unit 152 obtains a piece of column data 10a corresponding to "year 2005" from the time-series data 141a, as illustrated in FIG. 3. Further, as illustrated in FIG. 5, the calculating unit 152 obtains a piece of column data 10b corresponding to "year 2000" from the time-series data 141b. The calculating unit 152 calculates a correlation coefficient 20b between the piece of column data 10a and the piece of column data 10b. The calculating unit 152 registers the correlation coefficient 20b into the corresponding position for "year 2000" within correlation coefficient data 145b. By repeatedly performing the process described above with respect to each of the remaining pieces of column data being included in the time-series data 141b and corresponding to "years 2001 to 2013", the calculating unit 152 calculates the correlation coefficient data 145b.

In this situation, the calculating unit 152 may calculate the correlation coefficients by performing any type of process. For example, the calculating unit 152 may calculate the correlation coefficients by using Expression (1). In Expression (1), the letter "n" denotes the number of records in a piece of column data. The letters "$x_i$" denotes the value of an i-th record in the piece of column data of the target index. The letters "$y_i$" denotes the value of an i-th record in the piece of column data of one of the index contents entries other than the target index. The letter "x-bar" denotes an average value of the piece of column data of the target index. The letter "y-bar" denotes an average value of the piece of column data of one of the index contents entries other than the target index.

$$\text{The correlation coefficient} = \frac{\sum_{i=1}^{n}(x_i - \bar{x})(y_i - \bar{y})}{\sqrt{\sum_{i=1}^{n}(x_i - \bar{x})^2}\sqrt{\sum_{i=1}^{n}(y_i - \bar{y})^2}} \tag{1}$$

By repeatedly performing the process of selecting one of the index contents entries other than the target index and calculating correlation coefficient data, the calculating unit 152 calculates pieces of correlation coefficient data each of which is calculated between the target index and a different one of the index contents entries. The calculating unit 152 outputs the pieces of correlation coefficient data calculated between the target index and the index contents entries to the estimating unit 153.

The estimating unit 153 is a processing unit that estimates an index having a causality relationship with the target index, on the basis of characteristics of a time-series fluctuation of the correlation coefficient data between the target index and the index contents entries and the values of the correlation coefficients. In the explanation below, the index having a causality relationship with the target index will be referred to as a "causality index".

Out of the correlation coefficients corresponding to different years and being included in the correlation coefficient data, the estimating unit 153 identifies the correlation coefficient corresponding to the reference year and further identifies one or more pieces of correlation coefficient data with which the correlation coefficient corresponding to the reference year becomes equal to or larger than a threshold value as a processing target.

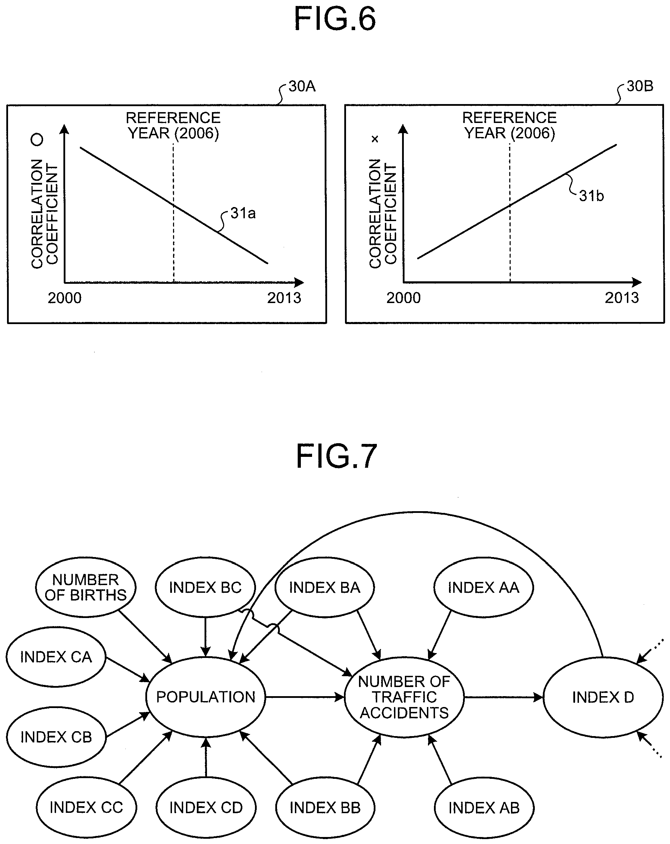

Subsequently, on the basis of the characteristics of the time-series fluctuation of the pieces of correlation coefficient data with which the correlation coefficient corresponding to the reference year becomes equal to or larger than the threshold value, the estimating unit 153 estimates whether or not each of the index contents entries corresponding to the pieces of correlation coefficient data is a causality index. FIG. 6 presents charts for explaining a process performed by the estimating unit to estimate the causality index.

In each of a charts 30A and 30B in FIG. 6, the horizontal axis expresses the years, whereas the vertical axis expresses a correlation coefficient. Each of a line segments 31a and 31b represents an approximation straight line of a certain piece of correlation coefficient data. As indicated by the line segment 31a, when the slope coefficient value exhibits a positive coefficient value, the estimating unit 153 estimates that the index contents entry corresponding to the line segment 31a is a causality index. On the contrary, as indicated by the line segment 31b, when the slope coefficient value exhibits a negative coefficient value, the estimating unit 153 does not estimate that the index contents entry corresponding to the line segment 31b is a causality index.

By repeatedly performing the process described above with respect to the correlation coefficient data of each of the index contents entries, the estimating unit 153 estimates causality indices each having a causality relationship with the target index. The estimating unit 153 registers information in which the target index, the time-series data of the target index, and the causality indices are kept in correspondence with one another, into the causality index network data 142.

For example, as for the time-series data of the target index to be registered into the causality index network data 142, the estimating unit 153 registers the time-series data registered in the time-series index database 141 without applying any modification thereto. The time-series data of the target index is subject to a future prediction made by the predicting unit 154 (explained later) and will be updated. Further, the estimating unit 153 may cause the display unit 130 to display the causality indices each having a causality relationship with the target index.

The predicting unit 154 is a processing unit that makes a future prediction of the time-series data of the target index, by performing a regression analysis, while using the time-series data of the target index as a response variable and using the time-series data of the causality indices as an explanatory variable. The predicting unit 154 updates the time-series data in the causality index network data 142 with time-series data of the target index resulting from the future prediction.

For example, by using Expression (2), the predicting unit 154 performs the regression analysis. In Expression (2), the letter "y" corresponds to a value of the target index. The letters "$x_1$", "$x_2$" and "$x_3$" are variables corresponding to approximation formulae of the pieces of time-series data of a first, a second, and a third causality indices of the target index. In the present example, for the sake of convenience in the explanation, the regression equation is explained for the situation where there are three causality indices; however, when there are more than three causality indices, a variable x of the approximation formula corresponding to the causality index is added to Expression (2). For each year, the predicting unit 154 searches for optimal values of the constants a, b, c, and D that make the value on the lefthand side of Expression (2) as close as possible to the value on the right-hand side of Expression (2).

$$y = ax_1 + bx_2 + cx_3 + D \qquad\qquad (2)$$

After calculating the optimal values of a, b, c, and D in Expression (2), the predicting unit 154 makes the future prediction of the target index by using the calculated optimal values. For example, after calculating the optimal values of the constants in Expression (2) with respect to the target index "population", the predicting unit 154 makes a future prediction of the population. When the time-series data 141a of the target index "population" is available only until year 2013 as illustrated in FIG. 3, the predicting unit 154 makes a future prediction of values in year 2014 and later, on the basis of Expression (2).

In this situation, as explained above, the predicting unit 154 makes the future prediction of the target index on the basis of the target index received by the receiving unit 151 and the causality indices corresponding to the target index, and subsequently selects another target index that takes the target index as a causality index thereof. The predicting unit 154 performs an analysis in the same manner as in the process described above, on the basis of the selected target index and causality indices corresponding to the selected target index. The predicting unit 154 repeatedly performs the process described above until the time-series data of the target index resulting from the future prediction converges.

FIG. 7 is a drawing for explaining a process performed by the predicting unit. For example, let us discuss an example in which the target index selected by the user is "population", while the causality indices each having a causality relationship with the target index "popularity" are "the number of births, the index BA, the index BB, the index BC, the index CA, the index CB, the index CC, the index CD, and the index D". The predicting unit 154 makes a future prediction of the target index "population" by performing a regression analysis while using the time-series data of the causality indices such as "the number of births, the index BA, the index BB, the index BC, the index CA, the index CB, the index CC, the index CD and the index D ".

Subsequently, the predicting unit 154 selects the index "the number of traffic accidents" that takes the target index "population" as a causality index thereof, as a target index. The predicting unit 154 makes a future prediction of the target index "the number of traffic accidents" by performing a regression analysis while using the time-series data of causality indices of the target index "the number of traffic accidents", namely "population, the index AA, the index AB, the index BB, and the index BC".

Subsequently, the predicting unit 154 selects the "index D" that takes the target index "the number of traffic accidents" as a causality index thereof, as a target index. The predicting unit 154 makes a future prediction of the target index "index D", by performing a regression analysis while using the time-series data of causality indices of the target index "index D", namely "the number of traffic accidents, an index, and another index". In this situation, when the future prediction of the index D has been made and the time-series data has been updated, the predicting unit 154 makes a future prediction again on the target index "population" of which the causality indices include the index D.

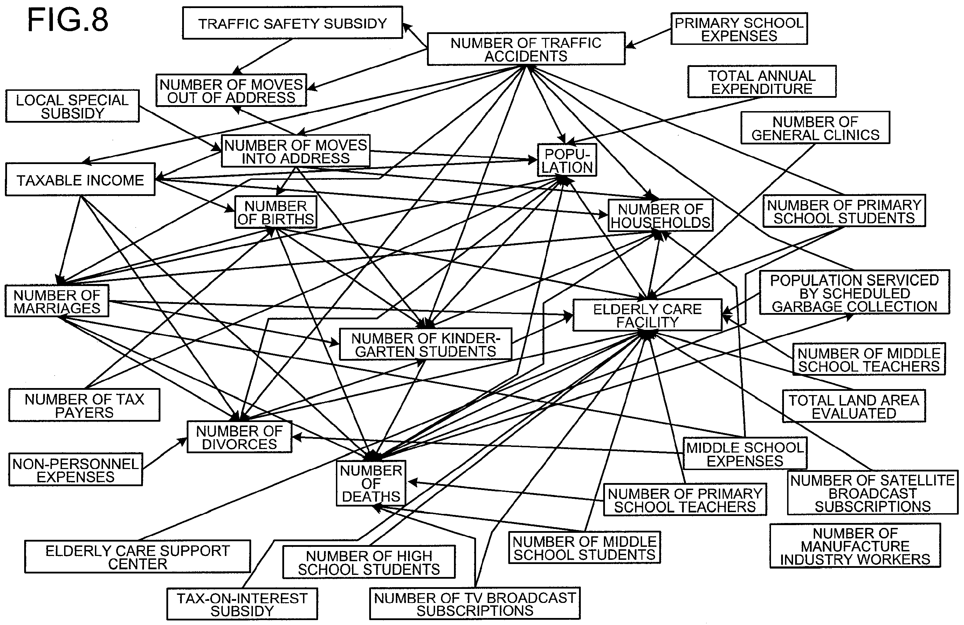

In this situation, when the future prediction of the index D has been made and the time-series data has been updated, the predicting unit 154 makes a future prediction again on the target index "population" of which the causality indices include the index D. The predicting unit 154 repeatedly performs the process described above until the time-series data of the target index converges. In the present example, for the sake of the convenience in the explanation, the relationships among the target indices and the causality indices are illustrated in FIG. 7; however, the causality index network indicating the relationships among the target indices and the causality indices is not limited to the example illustrated in FIG. 7. For instance, the relationship may be one illustrated in FIG. 8. FIG. 8 is a diagram illustrating the other example of the causality index network.

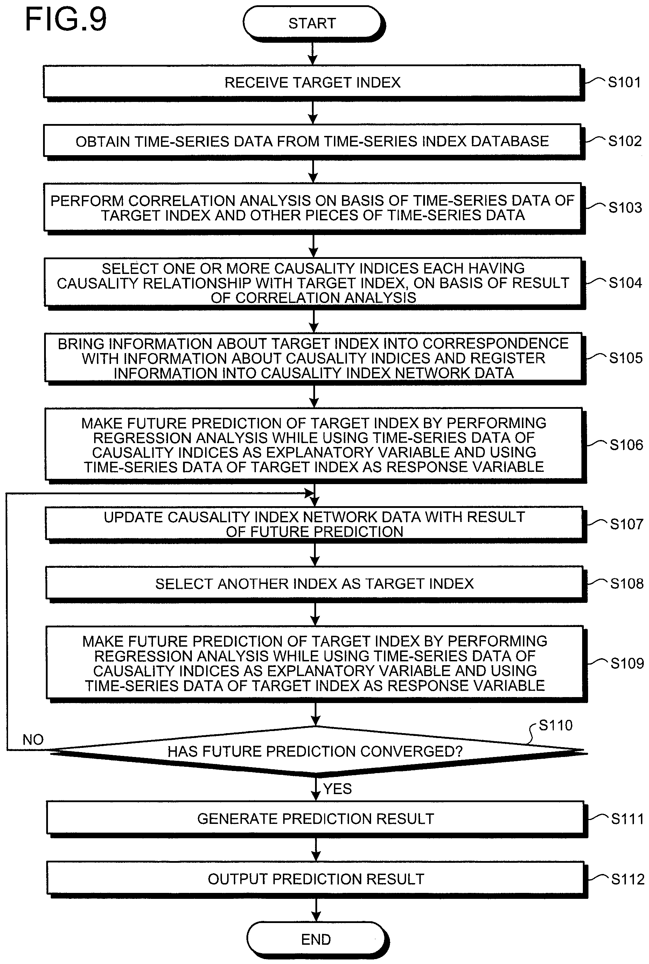

Next, an example of a processing procedure performed by the estimating apparatus 100 according to the present embodiment will be explained. FIG. 9 is a flowchart illustrating a processing procedure performed by the estimating apparatus according to the present embodiment. As illustrated in FIG. 9, the receiving unit 151 included in the estimating apparatus 100 receives a target index (step S101). The calculating unit 152 included in the estimating apparatus 100 obtains the time-series data of the target index and time-series data of other indices, from the time-series index database 141 (step S102).

The estimating unit 153 included in the estimating apparatus 100 performs a correlation analysis on the basis of the time-series data of the target index and the other pieces of time-series data (step S103). On the basis of a result of the correlation analysis, the estimating unit 153 selects one or more causality indices each having a causality relationship with the target index (step S104).

The estimating unit 153 brings information about the target index into correspondence with information about the causality indices and registers the information into the causality index network data 142 (step S105). The predicting unit 154 included in the estimating apparatus 100 makes a future prediction of the target index by performing a regression analysis while using the time-series data of the causality indices as an explanatory variable and using the time-series data of the target index as a response variable (step S106).

The predicting unit 154 updates the causality index network data 142 with the result of the future prediction (step S107). The predicting unit 154 selects another index as a target index (step S108). The predicting unit 154 makes a future prediction of the target index by performing a regression analysis while using the time-series data of the causality indices as an explanatory variable and using the time-series data of the target index as a response variable (step S109).

When the future prediction has not converged (step S110 : No), the predicting unit 154 proceeds to step S107. On the contrary, when the future prediction has converged (step S110 : Yes), the predicting unit 154 generates a prediction result (step S111) . The predicting unit 154 outputs the prediction result (step S112).

Next, advantageous effects of the estimating apparatus 100 according to the present embodiment will be explained. The estimating apparatus 100 calculates the correlation coefficients in the time-series between the pieces of time-series data of the group made up of the plurality of indices and the time-series data of the target index and further estimates the causality indices on the basis of the characteristics of the time-series fluctuations of the correlation coefficients and the values of the correlation coefficients. Accordingly, it is possible to appropriately estimate the causality indices each having a causality relationship with the target index.

On the basis of the correlation coefficients between the time-series data of the target index and the pieces of time-series data of the other indices, the estimating apparatus 100 repeatedly performs the process of judging whether or not each of the other indices is a causality index and registers the information about the target index and the information about the causality indices into the causality index network data 142 on the basis of the judgement result. Accordingly, it is possible to detect the indices each having a causality relationship with the target index in a comprehensive manner.

The estimating apparatus 100 predicts the time-series data of the target index corresponding to the future time, by performing the regression analysis while using the time-series data of the causality indices as an explanatory variable and using the time-series data of the target index as a response variable. Further, the estimating apparatus 100 repeatedly performs the process described above until the time-series data of the target index corresponding to the future time converges. Accordingly, it is possible to accurately predict the future data of the target index.

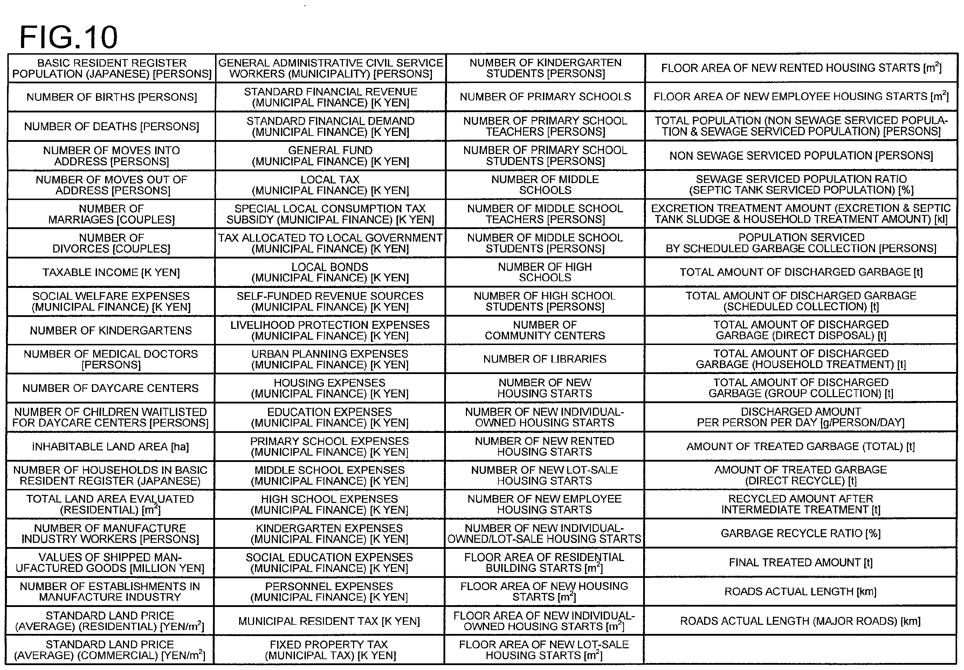

Next, an example of the prediction result obtained by the estimating apparatus 100 according to the present embodiment will be explained. In the present example, a result will be explained in a situation where the population is predicted, while the 83 types of indices illustrated in FIG. 10 are the indices subject to the process. FIG. 10 is a table illustrating the examples of the indices used for predicting the population.

With respect to the 83 indices in FIG. 10, the calculating unit 152 included in the estimating apparatus 100 calculated pieces of correlation coefficient data for years 2000 to 2013 while using year 2006 for the population as a reference year. The estimating unit 153 included in the estimating apparatus 100 estimated causality indices of the population.

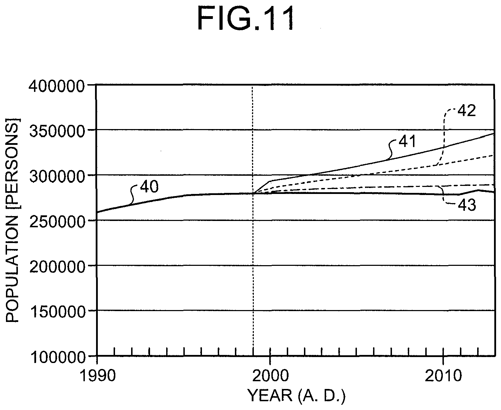

The predicting unit 154 included in the estimating apparatus 100 generated a regression expression by using actual data in the past from years 1990 to 1999, while using the causality indices estimated by the estimating unit 153 as an explanatory variable and using the population as a response variable. The predicting unit 154 further performed the regression analyses by selecting indices by implementing mutually-different first, second, and third methods described below so as to compare the results of the regression analyses with the actual values from years 2000 to 2013. FIG. 11 is a chart illustrating a result of the comparison between the prediction results and the actual value in the regression analyses using the mutually-different index selecting methods.

In FIG. 11, the horizontal axis expresses the years, whereas the vertical axis expresses the population. A line segment 40 indicates the actual count value of the population. A line segment 41 indicates a result of the future prediction of the population obtained by using the first method described below. A line segment 42 indicates a result of the future prediction of the population obtained by using the second method described below. A line segment 43 indicates a result of the future prediction of the population obtained by using the third method described below.

The first method is a method by which a future prediction of the population is made by selecting nine indices each considered to have a large correlation coefficient with the population on the basis of an empirical finding or the like without using any correlation coefficient data and performing a regression analysis once. It is assumed that the nine selected indices are: the number of births; the number of moves into the address; the number of moves out of the address; the number of marriages; the number of divorces; taxable income; the number of kindergartens, the number of medical doctors, and the number of daycare centers.

The second method is a method by which a future prediction of the population is made by estimating causality indices by executing the estimating process performed by the estimating unit 153 while using the correlation coefficient data and performing a regression analysis once. It is assumed that four estimated indices are: the number of births; the number of moves into the address; the number of moves out of the address; the number of marriages; and taxable income.

The third method is a method by which a future prediction of the population is made by estimating causality indices by executing the estimating process performed by the estimating unit 153 while using the correlation coefficient data and further executing the future prediction processes performed by the predicting unit 154 until the future prediction converges.

As illustrated in FIG. 11, as the line segment 40 indicating the actual values from years 2000 to 2013 is compared with the line segments 41 to 43 obtained by using the mutually-different methods, the relative error between the line segment 40 and the line segment 41 is 13.1% per year. The relative error between the line segment 40 and the line segment 42 is 8.1% per year. The relative error between the line segment 40 and the line segment 43 is 2.1% per year. Accordingly, it is observed that the estimating apparatus 100 according to the present embodiment is able to more accurately predict the population than the conventional technique and the like. Further, it is possible to appropriately select the indices such as the number of births, the number of moves into the address, the number of marriages, and the taxable income, as the causality indices of the target index. It is therefore implied that, by making and executing an administrative plan to improve these indices, it is possible to expect the target index to improve.

As explained above, according to at least an aspect of the disclosure herein, it is possible to easily find the indices each having a causality relationship with the target index. It is therefore possible to make an administrative plan that is effective and has a high possibility of realizing the goal. Further, because the level of precision of the future prediction using the regression analysis or the like is enhanced, it is possible to make clear the effects that will be achieved when the administrative plan is executed. It is therefore possible to easily make an assessment about introducing the administrative plan.

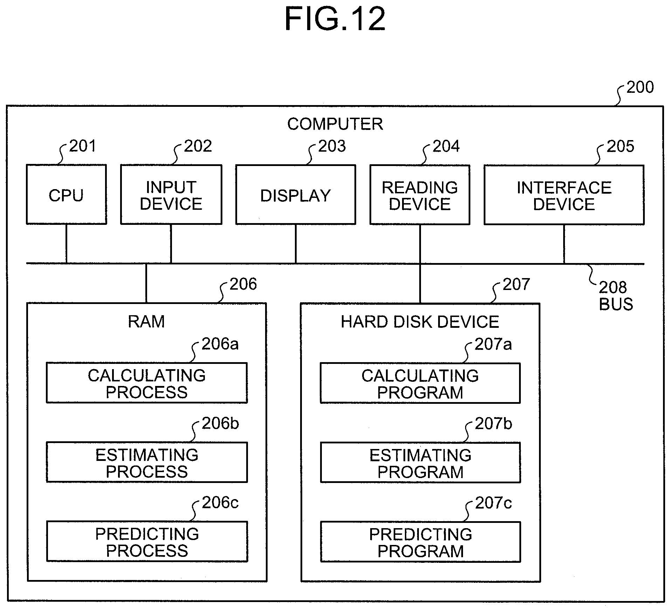

Next, an example of a computer that executes an estimating program that realizes the same functions as those of the estimating apparatus 100 described in the embodiment above will be explained. FIG. 12 is a diagram illustrating the example of the computer that executes the estimating program.

As illustrated in FIG. 12, a computer 200 includes: a CPU 201 that executes various types of arithmetic processes; an input device 202 that receives an input of data from a user; and a display 203. Further, the computer 200 also includes:

a reading device 204 that reads a computer program or the like from a storage medium; and an interface device 205 that gives and receives data to and from another computer via a network. Further, the computer 200 also includes: a RAM 206 that temporarily stores various types of information therein; and a hard disk device 207. Further, the devices 201 to 207 are connected to a bus 208.

The hard disk device 207 includes a calculating program 207a, an estimating program 207b, and a predicting program 207c. The CPU 201 reads and loads the calculating program 207a, the estimating program 207b, and the predicting program 207c into the RAM 206.

The calculating program 207a functions as a calculating process 206a. The estimating program 207b functions as an estimating process 206b. The predicting program 207c functions as a predicting process 206c.

Processes performed in the calculating process 206a correspond to the processes performed by the calculating unit 152. Processes performed in the estimating process 206b correspond to the processes performed by the estimating unit 153. Processes performed in the predicting process 206c correspond to the processes performed by the predicting unit 154.

In this situation, the calculating program 207a, the estimating program 207b, and the predicting program 207c do not necessarily have to be stored in the hard disk device 207 to begin with. For example, the programs may be stored in a "portable physical medium" to be inserted into the computer 200, such as a flexible disk (FD), a Compact Disk Read-Only Memory (CD-ROM), a Digital Versatile Disk (DVD), a magneto-optical disk, an Integrated Circuit (IC) card, or the like. Further, the computer 200 may be configured to read and execute the programs 207a to 207c.

It is possible to estimate the index having a causality relationship with the index related to an issue.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

**Claims**

1. An estimating apparatus comprising:

   a calculating unit(152) that calculates a correlation coefficient of first time-series data with respect to second time-series data on a basis of the first time-series data of a plurality of first indices and the second time-series data of a second index; and
   an estimating unit(153) that estimates an index having a causality relationship with the second index from among the plurality of first indices, on a basis of characteristics of time-series fluctuations of the correlation coefficients and values of the correlation coefficients.

2. The estimating apparatus according to claim 1, further comprising: a predicting unit(154) that performs a regression analysis while using the index estimated by the estimating unit(153) as an explanatory variable and using the second time-series data of the second index as a response variable and predicts second time-series data of the second index corresponding to a future time.

3. The estimating apparatus according to claim 1 or 2, wherein the estimating unit(153) generates causality network data in which, for each of second indices, the second time-series data of the second index is kept in correspondence with the first time-series data of at least one first index having a causality relationship with the second index, and the estimating unit(153) updates the causality network data every time the estimating unit(153) estimates a first index having a causality relationship with any of the second indices.

4. The estimating apparatus according to claim 2 or 3, wherein, the predicting unit(154) repeatedly selects a second index and at least one first index having a causality relationship with the second index on a basis of the causality network data, performs the regression analysis while using the selected first index as an explanatory variable and using the second time-series data of the selected second index as a response variable, predicts second time-series data of the selected second index corresponding to a future time and updates the causality network data based on the predicted second time-series data of the selected second index and the performing, until values of the second time-series data of the second index converge.

**5.** An estimating method implemented by a computer comprising:

calculating a correlation coefficient of first time-series data with respect to second time-series data on a basis of the first time-series data of a plurality of first indices and the second time-series data of a second index; and estimating an index having a causality relationship with the second index from among the plurality of first indices, on a basis of characteristics of time-series fluctuations of the correlation coefficients and values of the correlation coefficients.

**6.** The estimating method according to claim 5, further comprising: performing a regression analysis while using the index estimated by the estimating as an explanatory variable and using the second time-series data of the second index as a response variable and predicting second time-series data of the second index corresponding to a future time.

**7.** The estimating method according to claim 5 or 6, further comprising: generating causality network data in which, for each of second indices, the second time-series data of the second index is kept in correspondence with the first time-series data of at least one first index having a causality relationship with the second index and updating the causality network data every time the estimating estimates a first index having a causality relationship with any of the second indices.

**8.** The estimating method according to claim 6 or 7, wherein, the performing selects a second index and at least one first index having a causality relationship with the second index on a basis of the causality network data and performs the regression analysis while using the selected first index as an explanatory variable and using the second time-series data of the selected second index as a response variable, the predicting predicts second time-series data of the selected second index corresponding to a future time and updating updates the causality network data based on the predicted second time-series data of the selected second index and the performing, the predicting and the updating repeatedly perform the process until values of the second time-series data of the second index converge.

**9.** An estimating computer program that causes a computer to perform a process comprising:

calculating a correlation coefficient of first time-series data with respect to second time-series data on a basis of the first time-series data of a plurality of first indices and the second time-series data of a second index; and estimating an index having a causality relationship with the second index from among the plurality of first indices, on a basis of characteristics of time-series fluctuations of the correlation coefficients and values of the correlation coefficients.

**10.** The estimating computer program according to claim 9 that causes the computer to perform the process further comprising: performing a regression analysis while using the index estimated by the estimating as an explanatory variable and using the second time-series data of the second index as a response variable and predicting second time-series data of the second index corresponding to a future time.

**11.** The estimating computer program according to claim 9 or 10 that causes the computer to perform the process further comprising: generating causality network data in which, for each of second indices, the second time-series data of the second index is kept in correspondence with the first time-series data of at least one first index having a causality relationship with the second index and updating the causality network data every time the estimating estimates a first index having a causality relationship with any of the second indices.

**12.** The estimating computer program according to any of claims 9 to 11, wherein the performing selects a second index and at least one first index having a causality relationship with the second index on a basis of the causality network data and performs the regression analysis while using the selected first index as an explanatory variable and using the second time-series data of the selected second index as a response variable, the predicting predicts second time-series data of the selected second index corresponding to a future time and updating updates the causality network data based on the predicted second time-series data of the selected second index and the performing, the predicting and the updating repeatedly perform the process until values of the second time-series data of the second index converge.

# FIG.1

# FIG.2

141

| INDEX CONTENTS | TIME-SERIES DATA |
|---|---|
| POPULATION | TIME-SERIES DATA OF POPULATION |
| NUMBER OF BIRTHS | TIME-SERIES DATA OF NUMBER OF BIRTHS |
| NUMBER OF MOVES INTO ADDRESS | TIME-SERIES DATA OF MOVES INTO ADDRESS |
| NUMBER OF MOVES OUT OF ADDRESS | TIME-SERIES DATA OF MOVES OUT OF ADDRESS |
| ... | ... |

# FIG.3

⌒10a  ⌒141a

EP 3 214 587 A1

1742 MUNICIPALITIES (CITIES, WARDS, TOWNS, AND VILLAGES)

| | A | B | C | D | E | F | G | H | I | J | K | L | M | N | O |
|---|---|---|---|---|---|---|---|---|---|---|---|---|---|---|---|
| 1 | | BASIC RESIDENT REGISTER | BASIC RESIDENT REGISTER | BASIC RESIDENT REGISTER | BASIC RESIDENT REGISTER | BASIC RESIDENT REGISTER | BASIC RESIDENT REGISTER | BASIC RESIDENT REGISTER | BASIC RESIDENT REGISTER | BASIC RESIDENT REGISTER | BASIC RESIDENT REGISTER | BASIC RESIDENT REGISTER | BASIC RESIDENT REGISTER | BASIC RESIDENT REGISTER | BASIC RESIDENT REGISTER |
| 2 | NAMES OF MUNICIPALITIES | 2000 | 2001 | 2002 | 2003 | 2004 | 2005 | 2006 | 2007 | 2008 | 2009 | 2010 | 2011 | 2012 | 2013 |
| 1705 | GINOWAN SHI (CITY), OKINAWA KEN (PREFECTURE) | 85,918 | 86,898 | 87,229 | 87,700 | 88,565 | 89,072 | 90,018 | 90,589 | 91,264 | 92,062 | 92,467 | 93,751 | 94,062 | 94,991 |
| 1706 | ISHIGAKI SHI (CITY), OKINAWA KEN (PREF.) | 44,314 | 44,345 | 44,739 | 45,160 | 45,705 | 46,771 | 47,475 | 47,690 | 47,973 | 48,089 | 48,123 | 48,199 | 48,224 | 48,559 |
| 1707 | URASOE SHI (CITY), OKINAWA KEN (PREF.) | 104,307 | 104,707 | 105,532 | 106,270 | 107,026 | 107,980 | 108,707 | 109,373 | 110,285 | 110,894 | 111,463 | 112,413 | 113,089 | 113,453 |
| 1708 | NAGO SHI (CITY), OKINAWA KEN (PREF.) | 55,991 | 56,301 | 56,793 | 57,434 | 58,083 | 58,725 | 59,270 | 59,628 | 59,742 | 59,869 | 60,160 | 60,472 | 60,768 | 61,550 |
| 1709 | ITOMAN SHI (CITY), OKINAWA KEN (PREF.) | 56,144 | 56,323 | 56,565 | 56,978 | 57,108 | 57,424 | 57,523 | 57,695 | 58,138 | 58,620 | 58,799 | 58,940 | 59,318 | 59,668 |
| 1710 | OKINAWA SHI (CITY), OKINAWA KEN (PREF.) | 124,255 | 125,762 | 127,183 | 128,635 | 130,117 | 131,521 | 132,264 | 133,096 | 133,762 | 134,555 | 135,363 | 136,330 | 137,167 | 137,706 |
| 1711 | TOMIGUSUKU SHI (CITY), OKINAWA KEN (PREF.) | 50,019 | 50,652 | 51,436 | 51,835 | 52,546 | 53,226 | 54,025 | 55,038 | 56,050 | 56,867 | 57,857 | 58,794 | 59,634 | 60,609 |
| 1712 | URUMA SHI (CITY), OKINAWA KEN (PREF.) | 112,942 | 113,697 | 114,453 | 115,106 | 115,750 | 116,405 | 116,573 | 116,593 | 117,105 | 118,160 | 118,994 | 119,558 | 119,857 | 120,372 |
| 1713 | MIYAKOJIMA SHI (CITY), OKINAWA KEN (PREF.) | 56,433 | 56,514 | 56,146 | 56,040 | 55,873 | 55,782 | 55,423 | 55,201 | 54,613 | 54,809 | 54,720 | 54,784 | 54,310 | 54,802 |
| 1714 | NANJO SHI (CITY), OKINAWA KEN (PREF.) | 40,434 | 40,471 | 40,664 | 40,688 | 40,698 | 40,733 | 40,616 | 40,429 | 40,599 | 40,728 | 40,774 | 40,972 | 41,237 | 41,687 |
| 1715 | KUNIGAMI SON (VILLAGE), OKINAWA KEN (PREF.) | 5,913 | 5,840 | 5,839 | 5,771 | 5,763 | 5,682 | 5,632 | 5,554 | 5,451 | 5,377 | 5,294 | 5,271 | 5,169 | 5,111 |
| 1716 | OGIMI SON (VILLAGE), OKINAWA KEN (PREF.) | 3,527 | 3,534 | 3,534 | 3,527 | 3,530 | 3,511 | 3,478 | 3,417 | 3,417 | 3,363 | 3,398 | 3,363 | 3,346 | 3,294 |
| 1717 | HIGASHI SON (VILLAGE), OKINAWA KEN (PREF.) | 1,940 | 1,954 | 1,965 | 1,962 | 1,966 | 2,015 | 2,029 | 1,937 | 1,827 | 1,923 | 1,846 | 1,938 | 1,905 | 1,897 |
| 1718 | NAKIJIN SON (VILLAGE), OKINAWA KEN (PREF.) | 9,500 | 9,541 | 9,514 | 9,563 | 9,584 | 9,613 | 9,505 | 9,485 | 9,490 | 9,560 | 9,518 | 9,554 | 9,501 | 9,555 |
| 1719 | MOTOBU CHO (TOWN), OKINAWA KEN (PREF.) | 14,641 | 14,553 | 14,562 | 14,481 | 14,469 | 14,358 | 14,282 | 14,142 | 14,055 | 13,964 | 13,749 | 13,772 | 13,743 | 13,685 |
| 1720 | ONNA SON (VILLAGE), OKINAWA KEN (PREF.) | 9,731 | 9,779 | 9,948 | 10,023 | 10,165 | 10,296 | 10,295 | 10,332 | 10,286 | 10,401 | 10,435 | 10,491 | 10,439 | 10,428 |
| 1721 | GINOZA SON (VILLAGE), OKINAWA KEN (PREF.) | 5,035 | 5,133 | 5,208 | 5,253 | 5,278 | 5,345 | 5,396 | 5,433 | 5,502 | 5,585 | 5,647 | 5,754 | 5,799 | 5,838 |
| 1722 | KIN CHO (TOWN), OKINAWA KEN (PREF.) | 10,342 | 10,454 | 10,502 | 10,618 | 10,771 | 10,822 | 10,990 | 11,037 | 11,103 | 11,170 | 11,215 | 11,247 | 11,307 | 11,333 |
| 1723 | IE SON (VILLAGE), OKINAWA KEN (PREF.) | 5,391 | 5,398 | 5,398 | 5,325 | 5,248 | 5,204 | 5,102 | 5,007 | 4,935 | 4,914 | 4,840 | 4,822 | 4,775 | 4,730 |
| 1724 | YOMITAN SON (VILLAGE), OKINAWA KEN (PREF.) | 37,076 | 37,304 | 37,550 | 37,869 | 38,321 | 38,577 | 38,675 | 38,729 | 39,110 | 39,522 | 40,005 | 40,370 | 40,480 | 40,682 |
| 1725 | KADENA CHO (TOWN), OKINAWA KEN (PREF.) | 13,856 | 13,885 | 13,904 | 13,805 | 13,754 | 13,736 | 13,727 | 13,772 | 13,813 | 13,862 | 13,875 | 13,838 | 13,769 | 13,790 |
| 1726 | CHATAN CHO (TOWN), OKINAWA KEN (PREF.) | 25,585 | 25,895 | 26,140 | 26,393 | 26,752 | 26,881 | 27,034 | 27,101 | 27,239 | 27,340 | 27,676 | 27,775 | 27,839 | 28,080 |
| 1727 | KITANAKAGUSUKU SON (VILLAGE), OKINAWA KEN (PREF.) | 15,476 | 15,607 | 15,811 | 15,924 | 16,033 | 16,069 | 16,177 | 16,134 | 16,096 | 16,051 | 16,107 | 16,234 | 16,295 | 16,352 |
| 1728 | NAKAGUSUKU SON (VILLAGE), OKINAWA KEN (PREF.) | 14,544 | 14,826 | 15,006 | 15,270 | 15,565 | 15,928 | 16,252 | 16,470 | 16,889 | 17,144 | 17,639 | 17,843 | 18,375 | 18,792 |
| 1729 | NISHIHARA CHO (TOWN), OKINAWA KEN (PREF.) | 32,195 | 32,448 | 32,847 | 33,095 | 33,416 | 33,613 | 33,885 | 34,248 | 34,341 | 34,494 | 34,613 | 34,738 | 34,742 | 34,950 |
| 1730 | YONABARU CHO (TOWN), OKINAWA KEN (PREF.) | 15,360 | 15,290 | 15,360 | 15,469 | 15,511 | 15,620 | 15,687 | 15,672 | 15,739 | 16,265 | 16,991 | 17,499 | 18,157 | 18,454 |
| 1731 | HAEBARU CHO (TOWN), OKINAWA KEN (PREF.) | 31,353 | 31,911 | 32,451 | 32,676 | 32,945 | 33,176 | 33,645 | 34,015 | 34,380 | 34,739 | 35,137 | 35,591 | 35,866 | 36,514 |
| 1732 | TOKASHIKI SON (VILLAGE), OKINAWA KEN (PREF.) | 681 | 705 | 719 | 725 | 737 | 742 | 712 | 733 | 716 | 678 | 705 | 696 | 700 | 700 |
| 1733 | ZAMAMI SON (VILLAGE), OKINAWA KEN (PREF.) | 1,024 | 1,019 | 1,045 | 1,043 | 1,045 | 1,042 | 1,039 | 1,017 | 949 | 906 | 899 | 898 | 901 | 895 |
| 1734 | AGUNI SON (VILLAGE), OKINAWA KEN (PREF.) | 871 | 894 | 900 | 916 | 906 | 912 | 858 | 844 | 834 | 837 | 807 | 770 | 772 | 739 |
| 1735 | TONAKI SON (VILLAGE), OKINAWA KEN (PREF.) | 470 | 477 | 469 | 460 | 464 | 478 | 474 | 433 | 424 | 419 | 408 | 400 | 402 | 402 |
| 1736 | MINAMIDAITO SON (VILLAGE), OKINAWA KEN (PREF.) | 1,389 | 1,414 | 1,372 | 1,363 | 1,331 | 1,329 | 1,334 | 1,320 | 1,269 | 1,257 | 1,263 | 1,256 | 1,248 | 1,277 |
| 1737 | KITADAITO SON (VILLAGE), OKINAWA KEN (PREF.) | 529 | 559 | 550 | 529 | 528 | 515 | 521 | 516 | 510 | 514 | 524 | 535 | 541 | 553 |
| 1738 | IHEYA SON (VILLAGE), OKINAWA KEN (PREF.) | 1,590 | 1,635 | 1,624 | 1,586 | 1,547 | 1,534 | 1,488 | 1,430 | 1,370 | 1,364 | 1,317 | 1,290 | 1,298 | 1,311 |
| 1739 | IZENA SON (VILLAGE), OKINAWA KEN (PREF.) | 2,007 | 1,965 | 1,968 | 1,894 | 1,841 | 1,800 | 1,788 | 1,740 | 1,685 | 1,642 | 1,591 | 1,565 | 1,525 | 1,541 |
| 1740 | KUMEJIMA CHO (TOWN), OKINAWA KEN (PREF.) | 9,550 | 9,484 | 9,431 | 9,416 | 9,299 | 9,203 | 9,097 | 8,917 | 8,791 | 8,651 | 8,541 | 8,498 | 8,353 | 8,370 |
| 1741 | YAESE CHO (TOWN), OKINAWA KEN (PREF.) | 25,717 | 25,909 | 26,096 | 26,020 | 26,251 | 26,516 | 26,406 | 26,718 | 27,013 | 27,318 | 27,679 | 28,015 | 28,473 | 28,933 |
| 1742 | TARAMA SON (VILLAGE), OKINAWA KEN (PREF.) | 1,413 | 1,435 | 1,441 | 1,415 | 1,460 | 1,403 | 1,365 | 1,318 | 1,339 | 1,325 | 1,303 | 1,253 | 1,251 | 1,253 |
| 1743 | TAKETOMI CHO (TOWN), OKINAWA KEN (PREF.) | 3,616 | 3,679 | 3,765 | 3,889 | 4,036 | 4,169 | 4,153 | 4,102 | 4,010 | 3,930 | 3,923 | 3,924 | 3,946 | 4,061 |
| 1744 | YONAGUNI CHO (TOWN), OKINAWA KEN (PREF.) | 1,789 | 1,781 | 1,803 | 1,718 | 1,713 | 1,677 | 1,660 | 1,618 | 1,567 | 1,556 | 1,581 | 1,556 | 1,526 | 1,543 |

# FIG.4

142

| TARGET INDEX | TIME-SERIES DATA | CAUSALITY INDICES |
|---|---|---|
| POPULATION | TIME-SERIES DATA OF POPULATION | NUMBER OF BIRTHS, INDEX CA, INDEX CB, INDEX CC, INDEX CD, INDEX BA, INDEX BB, INDEX BC, INDEX D |
| NUMBER OF TRAFFIC ACCIDENTS | TIME-SERIES DATA OF NUMBER OF TRAFFIC ACCIDENTS | POPULATION, INDEX BA, INDEX BC, INDEX AA, INDEX AB |
| ... | ... | ... |

# FIG.5

10b  141b

| | P | Q | R | S | T | U | V | W | X | Y | Z | AA | AB | AC |
|---|---|---|---|---|---|---|---|---|---|---|---|---|---|---|
| A | NUMBER OF BIRTHS [PERSONS] | NUMBER OF BIRTHS [PERSONS] | NUMBER OF BIRTHS [PERSONS] | NUMBER OF BIRTHS [PERSONS] | NUMBER OF BIRTHS [PERSONS] | NUMBER OF BIRTHS [PERSONS] | NUMBER OF BIRTHS [PERSONS] | NUMBER OF BIRTHS [PERSONS] | NUMBER OF BIRTHS [PERSONS] | NUMBER OF BIRTHS [PERSONS] | NUMBER OF BIRTHS [PERSONS] | NUMBER OF BIRTHS [PERSONS] | NUMBER OF BIRTHS [PERSONS] | NUMBER OF BIRTHS [PERSONS] |
| NAMES OF MUNICIPALITIES | 2000 | 2001 | 2002 | 2003 | 2004 | 2005 | 2006 | 2007 | 2008 | 2009 | 2010 | 2011 | 2012 | 2013 |
| GINOWAN SHI (CITY), OKINAWA KEN (PREFECTURE) | 1,286 | 1,342 | 1,278 | 1,176 | 1,247 | 1,125 | 1,271 | 1,218 | 1,165 | 1,275 | 1,278 | 1,312 | 1,279 | 1,282 |
| ISHIGAKI SHI (CITY), OKINAWA KEN (PREF.) | 576 | 608 | 513 | 547 | 615 | 534 | 558 | 673 | 692 | 656 | 653 | 629 | 584 | 666 |
| URASOE SHI (CITY), OKINAWA KEN (PREF.) | 1,644 | 1,682 | 1,559 | 1,627 | 1,511 | 1,492 | 1,539 | 1,487 | 1,534 | 1,535 | 1,509 | 1,541 | 1,542 | 1,445 |
| NAGO SHI (CITY), OKINAWA KEN (PREF.) | 749 | 760 | 728 | 689 | 686 | 771 | 729 | 749 | 744 | 730 | 765 | 758 | 731 | 763 |
| ITOMAN SHI (CITY), OKINAWA KEN (PREF.) | 661 | 715 | 691 | 684 | 664 | 686 | 719 | 703 | 690 | 733 | 733 | 723 | 740 | 837 |
| OKINAWA SHI (CITY), OKINAWA KEN (PREF.) | 1,745 | 1,824 | 1,776 | 1,776 | 1,783 | 1,736 | 1,731 | 1,788 | 1,794 | 1,759 | 1,704 | 1,692 | 1,750 | 1,751 |
| TOMIGUSUKU SHI (CITY), OKINAWA KEN (PREF.) | 730 | 778 | 735 | 744 | 733 | 712 | 784 | 791 | 843 | 849 | 869 | 834 | 921 | 934 |
| URUMA SHI (CITY), OKINAWA KEN (PREF.) | 1,423 | 1,429 | 1,359 | 1,393 | 1,344 | 1,359 | 1,302 | 1,357 | 1,355 | 1,363 | 1,404 | 1,326 | 1,324 | 1,320 |
| MIYAKOJIMA SHI (CITY), OKINAWA KEN (PREF.) | 602 | 573 | 572 | 537 | 567 | 540 | 566 | 569 | 603 | 565 | 558 | 586 | 606 | 559 |
| NANJO SHI (CITY), OKINAWA KEN (PREF.) | 341 | 359 | 350 | 364 | 341 | 329 | 337 | 361 | 324 | 365 | 356 | 363 | 359 | 387 |
| KUNIGAMI SON (VILLAGE), OKINAWA KEN (PREF.) | 56 | 43 | 55 | 38 | 42 | 50 | 39 | 45 | 44 | 36 | 41 | 43 | 35 | 36 |
| OGIMI SON (VILLAGE), OKINAWA KEN (PREF.) | 19 | 30 | 16 | 16 | 18 | 27 | 11 | 22 | 24 | 18 | 13 | 30 | 15 | 24 |
| HIGASHI SON (VILLAGE), OKINAWA KEN (PREF.) | 17 | 16 | 17 | 11 | 11 | 22 | 18 | 9 | 15 | 10 | 14 | 7 | 16 | 11 |
| NAKIJIN SON (VILLAGE), OKINAWA KEN (PREF.) | 97 | 74 | 81 | 78 | 79 | 85 | 83 | 69 | 86 | 98 | 71 | 83 | 81 | 85 |
| MOTOBU CHO (TOWN), OKINAWA KEN (PREF.) | 120 | 128 | 118 | 117 | 134 | 116 | 116 | 120 | 117 | 119 | 125 | 123 | 116 | 146 |
| ONNA SON (VILLAGE), OKINAWA KEN (PREF.) | 80 | 74 | 97 | 107 | 92 | 101 | 96 | 88 | 111 | 100 | 87 | 112 | 104 | 96 |
| GINOZA SON (VILLAGE), OKINAWA KEN (PREF.) | 56 | 54 | 55 | 57 | 60 | 64 | 63 | 65 | 71 | 75 | 74 | 72 | 95 | 77 |
| KIN CHO (TOWN), OKINAWA KEN (PREF.) | 112 | 108 | 118 | 99 | 120 | 118 | 133 | 117 | 130 | 136 | 147 | 157 | 129 | 170 |
| IE SON (VILLAGE), OKINAWA KEN (PREF.) | 46 | 56 | 48 | 42 | 47 | 40 | 35 | 30 | 30 | 41 | 31 | 37 | 28 | 36 |
| YOMITAN SON (VILLAGE), OKINAWA KEN (PREF.) | 520 | 481 | 484 | 457 | 489 | 430 | 440 | 452 | 411 | 438 | 468 | 467 | 476 | 471 |
| KADENA CHO (TOWN), OKINAWA KEN (PREF.) | 158 | 165 | 131 | 130 | 149 | 127 | 128 | 153 | 145 | 129 | 138 | 139 | 139 | 146 |
| CHATAN CHO (TOWN), OKINAWA KEN (PREF.) | 382 | 378 | 352 | 353 | 336 | 346 | 313 | 337 | 339 | 337 | 345 | 344 | 317 | 344 |
| KITANAKAGUSUKU SON (VILLAGE), OKINAWA KEN (PREF.) | 221 | 195 | 188 | 219 | 225 | 180 | 222 | 206 | 168 | 181 | 199 | 191 | 175 | 161 |
| NAKAGUSUKU SON (VILLAGE), OKINAWA KEN (PREF.) | 144 | 144 | 152 | 148 | 131 | 146 | 177 | 182 | 200 | 173 | 208 | 205 | 194 | 217 |
| NISHIHARA CHO (TOWN), OKINAWA KEN (PREF.) | 422 | 418 | 427 | 397 | 410 | 387 | 379 | 399 | 408 | 389 | 400 | 374 | 388 | 375 |
| YONABARU CHO (TOWN), OKINAWA KEN (PREF.) | 196 | 176 | 165 | 158 | 178 | 185 | 161 | 194 | 176 | 186 | 217 | 251 | 273 | 273 |
| HAEBARU CHO (TOWN), OKINAWA KEN (PREF.) | 476 | 506 | 447 | 462 | 471 | 429 | 493 | 482 | 524 | 510 | 495 | 516 | 554 | 516 |
| TOKASHIKI SON (VILLAGE), OKINAWA KEN (PREF.) | 11 | 10 | 10 | 6 | 8 | 12 | 5 | 12 | 9 | 5 | 10 | 6 | 12 | 5 |
| ZAMAMI SON (VILLAGE), OKINAWA KEN (PREF.) | 13 | 14 | 11 | 13 | 11 | 8 | 10 | 9 | 8 | 13 | 5 | 11 | 11 | 7 |
| AGUNI SON (VILLAGE), OKINAWA KEN (PREF.) | 13 | 11 | 6 | 14 | 7 | 4 | 8 | 3 | 2 | 10 | 7 | 7 | 1 | 5 |
| TONAKI SON (VILLAGE), OKINAWA KEN (PREF.) | 3 | 1 | 1 | 1 | 2 | 3 | 1 | 3 | 2 | 1 | 1 | 3 | 6 | 0 |
| MINAMIDAITO SON (VILLAGE), OKINAWA KEN (PREF.) | 16 | 18 | 14 | 23 | 14 | 14 | 19 | 18 | 11 | 16 | 14 | 15 | 13 | 14 |
| KITADAITO SON (VILLAGE), OKINAWA KEN (PREF.) | 4 | 11 | 7 | 6 | 6 | 5 | 3 | 6 | 2 | 4 | 1 | 6 | 3 | 7 |
| IHEYA SON (VILLAGE), OKINAWA KEN (PREF.) | 23 | 25 | 20 | 17 | 22 | 21 | 23 | 11 | 20 | 16 | 6 | 11 | 6 | 14 |
| IZENA SON (VILLAGE), OKINAWA KEN (PREF.) | 31 | 21 | 18 | 22 | 16 | 19 | 9 | 20 | 7 | 16 | 7 | 15 | 13 | 15 |
| KUMEJIMA CHO (TOWN), OKINAWA KEN (PREF.) | 105 | 110 | 93 | 101 | 82 | 100 | 75 | 78 | 96 | 95 | 88 | 93 | 81 | 74 |
| YAESE CHO (TOWN), OKINAWA KEN (PREF.) | 248 | 268 | 268 | 246 | 246 | 239 | 261 | 260 | 275 | 312 | 334 | 369 | 356 | 376 |
| TARAMA SON (VILLAGE), OKINAWA KEN (PREF.) | 20 | 19 | 23 | 23 | 16 | 15 | 9 | 9 | 12 | 14 | 14 | 11 | 13 | 8 |
| TAKETOMI CHO (TOWN), OKINAWA KEN (PREF.) | 47 | 35 | 42 | 46 | 49 | 61 | 66 | 56 | 64 | 56 | 59 | 58 | 56 | 44 |
| YONAGUNI CHO (TOWN), OKINAWA KEN (PREF.) | 24 | 22 | 25 | 20 | 21 | 20 | 21 | 18 | 19 | 18 | 25 | 12 | 22 | 17 |
| | | | | | | | | | | | | | | |
| | 0.995294 | 0.995064 | 0.995283 | 0.995237 | 0.995008 | 0.995035 | 0.99455 | 0.993727 | 0.993554 | 0.993062 | 0.992833 | 0.992369 | 0.991754 | 0.990985 |

20b  145b

# FIG.6

# FIG.7

FIG.8

# FIG.9

START

RECEIVE TARGET INDEX — S101

OBTAIN TIME-SERIES DATA FROM TIME-SERIES INDEX DATABASE — S102

PERFORM CORRELATION ANALYSIS ON BASIS OF TIME-SERIES DATA OF TARGET INDEX AND OTHER PIECES OF TIME-SERIES DATA — S103

SELECT ONE OR MORE CAUSALITY INDICES EACH HAVING CAUSALITY RELATIONSHIP WITH TARGET INDEX, ON BASIS OF RESULT OF CORRELATION ANALYSIS — S104

BRING INFORMATION ABOUT TARGET INDEX INTO CORRESPONDENCE WITH INFORMATION ABOUT CAUSALITY INDICES AND REGISTER INFORMATION INTO CAUSALITY INDEX NETWORK DATA — S105

MAKE FUTURE PREDICTION OF TARGET INDEX BY PERFORMING REGRESSION ANALYSIS WHILE USING TIME-SERIES DATA OF CAUSALITY INDICES AS EXPLANATORY VARIABLE AND USING TIME-SERIES DATA OF TARGET INDEX AS RESPONSE VARIABLE — S106

UPDATE CAUSALITY INDEX NETWORK DATA WITH RESULT OF FUTURE PREDICTION — S107

SELECT ANOTHER INDEX AS TARGET INDEX — S108

MAKE FUTURE PREDICTION OF TARGET INDEX BY PERFORMING REGRESSION ANALYSIS WHILE USING TIME-SERIES DATA OF CAUSALITY INDICES AS EXPLANATORY VARIABLE AND USING TIME-SERIES DATA OF TARGET INDEX AS RESPONSE VARIABLE — S109

S110

NO — HAS FUTURE PREDICTION CONVERGED?

YES

GENERATE PREDICTION RESULT — S111

OUTPUT PREDICTION RESULT — S112

END

# FIG.10

| | | | |
|---|---|---|---|
| BASIC RESIDENT REGISTER POPULATION (JAPANESE) [PERSONS] | GENERAL ADMINISTRATIVE CIVIL SERVICE WORKERS (MUNICIPALITY) [PERSONS] | NUMBER OF KINDERGARTEN STUDENTS [PERSONS] | FLOOR AREA OF NEW RENTED HOUSING STARTS [m$^2$] |
| NUMBER OF BIRTHS [PERSONS] | STANDARD FINANCIAL REVENUE (MUNICIPAL FINANCE) [K YEN] | NUMBER OF PRIMARY SCHOOLS | FLOOR AREA OF NEW EMPLOYEE HOUSING STARTS [m$^2$] |
| NUMBER OF DEATHS [PERSONS] | STANDARD FINANCIAL DEMAND (MUNICIPAL FINANCE) [K YEN] | NUMBER OF PRIMARY SCHOOL TEACHERS [PERSONS] | TOTAL POPULATION (NON SEWAGE SERVICED POPULATION & SEWAGE SERVICED POPULATION) [PERSONS] |
| NUMBER OF MOVES INTO ADDRESS [PERSONS] | GENERAL FUND (MUNICIPAL FINANCE) [K YEN] | NUMBER OF PRIMARY SCHOOL STUDENTS [PERSONS] | NON SEWAGE SERVICED POPULATION [PERSONS] |
| NUMBER OF MOVES OUT OF ADDRESS [PERSONS] | LOCAL TAX (MUNICIPAL FINANCE) [K YEN] | NUMBER OF MIDDLE SCHOOLS | SEWAGE SERVICED POPULATION RATIO (SEPTIC TANK SERVICED POPULATION) [%] |
| NUMBER OF MARRIAGES [COUPLES] | SPECIAL LOCAL CONSUMPTION TAX SUBSIDY (MUNICIPAL FINANCE) [K YEN] | NUMBER OF MIDDLE SCHOOL TEACHERS [PERSONS] | EXCRETION TREATMENT AMOUNT (EXCRETION & SEPTIC TANK SLUDGE & HOUSEHOLD TREATMENT AMOUNT) [kl] |
| NUMBER OF DIVORCES [COUPLES] | TAX ALLOCATED TO LOCAL GOVERNMENT (MUNICIPAL FINANCE) [K YEN] | NUMBER OF MIDDLE SCHOOL STUDENTS [PERSONS] | POPULATION SERVICED BY SCHEDULED GARBAGE COLLECTION [PERSONS] |
| TAXABLE INCOME [K YEN] | LOCAL BONDS (MUNICIPAL FINANCE) [K YEN] | NUMBER OF HIGH SCHOOLS | TOTAL AMOUNT OF DISCHARGED GARBAGE [t] |
| SOCIAL WELFARE EXPENSES (MUNICIPAL FINANCE) [K YEN] | SELF-FUNDED REVENUE SOURCES (MUNICIPAL FINANCE) [K YEN] | NUMBER OF HIGH SCHOOL STUDENTS [PERSONS] | TOTAL AMOUNT OF DISCHARGED GARBAGE (SCHEDULED COLLECTION) [t] |
| NUMBER OF KINDERGARTENS | LIVELIHOOD PROTECTION EXPENSES (MUNICIPAL FINANCE) [K YEN] | NUMBER OF COMMUNITY CENTERS | TOTAL AMOUNT OF DISCHARGED GARBAGE (DIRECT DISPOSAL) [t] |
| NUMBER OF MEDICAL DOCTORS [PERSONS] | URBAN PLANNING EXPENSES (MUNICIPAL FINANCE) [K YEN] | NUMBER OF LIBRARIES | TOTAL AMOUNT OF DISCHARGED GARBAGE (HOUSEHOLD TREATMENT) [t] |
| NUMBER OF DAYCARE CENTERS | HOUSING EXPENSES (MUNICIPAL FINANCE) [K YEN] | NUMBER OF NEW HOUSING STARTS | TOTAL AMOUNT OF DISCHARGED GARBAGE (GROUP COLLECTION) [t] |
| NUMBER OF CHILDREN WAITLISTED FOR DAYCARE CENTERS [PERSONS] | EDUCATION EXPENSES (MUNICIPAL FINANCE) [K YEN] | NUMBER OF NEW INDIVIDUAL-OWNED HOUSING STARTS | DISCHARGED AMOUNT PER PERSON PER DAY [g/PERSON/DAY] |
| INHABITABLE LAND AREA [ha] | PRIMARY SCHOOL EXPENSES (MUNICIPAL FINANCE) [K YEN] | NUMBER OF NEW RENTED HOUSING STARTS | AMOUNT OF TREATED GARBAGE (TOTAL) [t] |
| NUMBER OF HOUSEHOLDS IN BASIC RESIDENT REGISTER (JAPANESE) | MIDDLE SCHOOL EXPENSES (MUNICIPAL FINANCE) [K YEN] | NUMBER OF NEW LOT-SALE HOUSING STARTS | AMOUNT OF TREATED GARBAGE (DIRECT RECYCLE) [t] |
| TOTAL LAND AREA EVALUATED (RESIDENTIAL) [m$^2$] | HIGH SCHOOL EXPENSES (MUNICIPAL FINANCE) [K YEN] | NUMBER OF NEW EMPLOYEE HOUSING STARTS | RECYCLED AMOUNT AFTER INTERMEDIATE TREATMENT [t] |
| NUMBER OF MANUFACTURE INDUSTRY WORKERS [PERSONS] | KINDERGARTEN EXPENSES (MUNICIPAL FINANCE) [K YEN] | NUMBER OF NEW INDIVIDUAL-OWNED/LOT-SALE HOUSING STARTS | GARBAGE RECYCLE RATIO [%] |
| VALUES OF SHIPPED MAN-UFACTURED GOODS [MILLION YEN] | SOCIAL EDUCATION EXPENSES (MUNICIPAL FINANCE) [K YEN] | FLOOR AREA OF RESIDENTIAL BUILDING STARTS [m$^2$] | FINAL TREATED AMOUNT [t] |
| NUMBER OF ESTABLISHMENTS IN MANUFACTURE INDUSTRY | PERSONNEL EXPENSES (MUNICIPAL FINANCE) [K YEN] | FLOOR AREA OF NEW HOUSING STARTS [m$^2$] | ROADS ACTUAL LENGTH [km] |
| STANDARD LAND PRICE (AVERAGE) (RESIDENTIAL) [YEN/m$^2$] | MUNICIPAL RESIDENT TAX [K YEN] | FLOOR AREA OF NEW INDIVIDUAL-OWNED HOUSING STARTS [m$^2$] | ROADS ACTUAL LENGTH (MAJOR ROADS) [km] |
| STANDARD LAND PRICE (AVERAGE) (COMMERCIAL) [YEN/m$^2$] | FIXED PROPERTY TAX (MUNICIPAL TAX) [K YEN] | FLOOR AREA OF NEW LOT-SALE HOUSING STARTS [m$^2$] | |

EP 3 214 587 A1

# FIG.11

# FIG.12

COMPUTER — 200

201 CPU
202 INPUT DEVICE
203 DISPLAY
204 READING DEVICE
205 INTERFACE DEVICE

208 BUS

206 RAM
206a CALCULATING PROCESS
206b ESTIMATING PROCESS
206c PREDICTING PROCESS

207 HARD DISK DEVICE
207a CALCULATING PROGRAM
207b ESTIMATING PROGRAM
207c PREDICTING PROGRAM

Europäisches Patentamt

European Patent Office

Office européen des brevets

# EUROPEAN SEARCH REPORT

**Application Number**

EP 17 15 3829

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 236 940 B2 (CHAPPEL OSCAR A [US]) 26 June 2007 (2007-06-26) * figure 5 * * column 9, line 29 - line 48 * ----- | 1-12 | INV. G06Q10/04 G06Q10/06 |
| X | US 2015/161517 A1 (BAE YONG-JIN [KR] ET AL) 11 June 2015 (2015-06-11) * paragraph [0073] - paragraph [0075] * * figures 2,3 * ----- | 1-12 | |

**TECHNICAL FIELDS SEARCHED (IPC)**

G06Q

The present search report has been drawn up for all claims

| Place of search | Date of completion of the search | Examiner |
|---|---|---|
| Munich | 19 April 2017 | Thielemann, Benedikt |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

     .................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 15 3829

This annex lists the patent family members relating to the patent documents cited in the above-mentioned European search report.
The members are as contained in the European Patent Office EDP file on
The European Patent Office is in no way liable for these particulars which are merely given for the purpose of information.

19-04-2017

| Patent document cited in search report | | Publication date | Patent family member(s) | | Publication date |
|---|---|---|---|---|---|
| US 7236940 | B2 | 26-06-2007 | US | 7386526 B1 | 10-06-2008 |
| | | | US | 2002174005 A1 | 21-11-2002 |
| US 2015161517 | A1 | 11-06-2015 | KR | 20150067897 A | 19-06-2015 |
| | | | US | 2015161517 A1 | 11-06-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012160143 A
- JP 2008234094 A
- JP 2004078780 A